# EUROPEAN PATENT SPECIFICATION

(11) **EP 3 655 729 B1**
(45) Date of publication and mention of the grant of the patent: **07.09.2022**
(21) Application number: 18749873.8
(22) Date of filing: 12.07.2018
(51) Int. Cl.: B60N 2/16, B60N 2/06, B60N 2/02, B60N 2/12

(54) **A SYSTEM FOR MANUAL REPOSITIONING OF A VEHICLE SEAT**
SYSTEM ZUR MANUELLEN NEUPOSITIONIERUNG EINES FAHRZEUGSITZES
SYSTÈME DE REPOSITIONNEMENT MANUEL D'UN SIÈGE DE VÉHICULE

(30) Priority: 17.07.2017 IT 201700080394 U
(43) Date of publication of application: 27.05.2020
(73) Proprietor: Del Vecchio, Francesco, 55041 Camaiore (LU) (IT); Formichella, Matteo, 55045 Pietrasanta (LU) (IT)
(72) Inventor: Del Vecchio, Francesco, 55041 Camaiore (LU) (IT); Formichella, Matteo, 55045 Pietrasanta (LU) (IT)
(74) Representative: Martini, Riccardo
(86) International application number: PCT/IB2018/055169
(87) International publication number: WO 2019/016653

(56) References cited:
- EP-A1- 3 187 365
- WO-A1-2015/149059
- DE-A1-102010 017 929
- DE-A1-102014 208 383
- GB-A- 2 498 199
- JP-A- 2008 290 653
- US-A1- 2010 176 806
- US-A1- 2017 080 826

## Description

### Field of the invention

The present invention relates to the automotive field, and more in detail it relates to a system for assisting a manual repositioning of the seat of a user in a vehicle, for example of a car, to a predetermined position.

Furthermore, the invention relates to a vehicle seat comprising such a repositioning system.

In the description below vehicle seat is a seat adjustable in position, at least in the longitudinal direction. Furthermore, it is intended a seat of any commercial or industrial vehicle, of public or private use.

### Description of the prior art

Vehicle seats are designed to be adjusted by the user to obtain both comfort and safety, maintaining in the meantime a good sight of the outer environment and accessibility by the driver to the means for steering and controlling the vehicle.

Various seat position adjustment means are known, both of mechanical type, which provide a manual unlocking, adjusting and locking again, and of electro-mechanical type. The main adjustments, both for the driver and for the passenger, are the seat optimal position mainly in longitudinal direction, as well as in height direction with respect to the chassis of the vehicle, and in adjusting the reclination of the seatback.

In addition to the comfort, the adjustment of the seat optimal position is particularly relevant for the driver, both for having an optimal sight line, and for a correct access to the pedals and to the steering devices. The use of a vehicle by different people, for example in a family, or in company cars, compels the driver to reposition very frequently the seat adjustments before starting to drive, all times up to finding the optimal position.

Several types exist of seats with electro-mechanical adjustment that allow memorizing the seat optimal position and allow to reposition the seat to the optimal position when this is changed, mainly by different users.

For example, US4283036 or US4304386 describe a knob with a click element that blocks the rotation of the motor when the seat reaches a predetermined position.

In other cases, as described in US4434468, rotation pulses of the actuation motors are counted to know the position the seats, which can be stored in order to reposition the seats to a particular predetermined position.

Other cases, like DE102006015890, have hydraulic driving menas for the movement of the seats and memorize the position according to the position of the valves of the hydraulic circuit.

In US20130184942A1 a further example is described of a device operated electro-mechanically for actuating a car seat along an adjustment direction. The device comprises a controller configured to determine the position of the seat in accordance to data coming from sensors suitably arranged along the adjustment direction, making it possible to store the optimal position for the driver.

CN105599713 describes a system of automatically repositioning a car seat. The system comprises a memory unit, a unit for recognizing the identity of the users, and a CPU. The memory unit is configured to store data of a plurality of users and of the relative preferred seat positions. The unit for recognizing the identity is configured to recognizing the identity of the users and for sending this identity recognized to the CPU. In accordance to the data received, the CPU controls the adjustment of the seat in longitudinal direction and also the height of the seat, optimizing the comfort to the driver.

Electronically operated seats also exist, like in US5751129, that comprises four motors for adjusting the seat positions. Unlike other known electromechanical systems, does not count the rotation pulses of the motors for controlling the position, to avoid recalibration and wrong results in memorizing the position. For measuring the position in height, stroke, and seatback reclining linear potentiometers are used obtaining respective signals provided to an electronic control unit, which stores the desired positions and allows giving to the motors signals on the achievement of a correct position. A further sensor can be provided for seats with very long longitudinal strokes, comprising a knob with angular control and rolling on a rack made on the rail of the seat.

Also other systems use sensors, like US4198025, which has a potentiometer for measuring the positions of the seat, for communicating them to adjustment motors through the control unit.

The above described systems, however, have the drawback of having contact parts and then subject to wear, oxidation and in any case frequent maintenance.

US4909560 measures the position of the stroke without contact parts, with a Hall effect magnetic sensor and a strip of poles stuck to the rail, obtaining a magnetic signal at each pole met by the sensor. By counting the poles, in any of the two sliding direction, the position of the stroke of the seat can be obtained and then, communicated to the motors. Such solution, however, requires a precise memory of counting the pulses, and a frequent need setting the zero in one of the two end positions, with a loss of time for the user. Furthermore, it requires a large number of poles for achieving a sufficient precision of positioning. A further drawback is the need of space for positioning the strips of magnetic poles and the Hall effect sensors, in narrow spaces under the seats, requiring a special design.

GB2498199A describes a manual vehicle seat which allows a user to correctly position the seat. The seat has a first seat portion and a second seat portion which is movably coupled to the first seat portion. A sensing device provides a signal corresponding to at least one position of the second seat portion relative to the first seat portion and a memory device stores at least one value representative of a preferred position of the second seat portion relative to the first seat portion. An alert means alerts a user when the user is adjusting the seat position that the signal value provided by the sensing device corresponds to the stored value.

WO2015149059A1 describes a vehicle seat with a computer-controlled memory-lock that includes a seat bottom and a seat back coupled to the seat bottom to extend upwardly away from the seat bottom. The vehicle seat further includes a seat-bottom foundation arranged to interconnect the seat bottom and seat back to translate back and forth relative to a vehicle floor.

The above described systems cannot be used for storing positions of not driven seats, which are the majority, leaving out from possibility of control of the seats in a large part of the automotive market, i.e. of vehicles whose seats are not actuated but manually adjusted, by unlocking the movement, manual push or drag by the user, namely push/drag by the legs for the stroke, pushing the seatback for adjusting the reclination, or rotating a knob or a cric, in case of the adjusting the reclination seatback or lifting/lowering the seat.

### Summary of the invention

It is a feature of the present invention to provide a vehicle seat and a relative system of manual repositioning configured to enable a user to adjust quickly and easily the stroke of the seat with respect to a preferred adjustment position.

It is another feature of the present invention to provide such a seat and system that have reduced complexity with respect to the known systems.

It is also a feature of the present invention to provide such a seat and system that are of easy installation and use, also on seats already made or on vehicles already in circulation.

It is still a feature of the present invention to provide such a seat and system that allow a user to adjust quickly and easily the height of the seat with respect to a preferred height position.

It is a further feature of the present invention to provide such a seat and system that allow a user to adjust quickly and easily the reclination of the seatback with respect to a preferred reclination position.

It is then a feature of the present invention to provide such a seat and system that allow a user to adjust quickly and easily the stroke, and/or the height of the seat, and/or the reclination of the seatback with respect to positions of stroke, and/or of height of the seat, and/or of reclination in case of seats actuated in a only manually way.

These and other objects are achieved by a vehicle seat comprising the features of claim 1 or claim 5.

This way, even with a seat adjustable only manually, or with electromechanic adjustment without control of position, it is possible to memorize the position of the seat and to return to this position without automatic control. This is allowed by the measurement of the distance and the direct communication to the user of the signal of achievement of the memorized position, while the user is operating manually the adjustment of the stroke of the seat. The sensorial perception of the user by acoustic, sight, tactile senses of the signal allows the user to stop quickly the step of adjusting and to reach the desired position, previously recorded.

Then, in the case of a main user of the vehicle, and of more occasional users, which change the preferred position to the main user, the latter can return easily to this position. In fact that having previously recorded it, the user starts manually the adjustment of the seat, and then interrupts it at receiving the signal, without the need of repeated adjustment attempts of reaching the position, and with the reliability that the reached position is that from previously selected and always used. This is particularly relevant not only for the comfort, but also for safety, since the position allows correct arrangement of the legs with respect to the pedals, of the arms with respect to the steering wheel and to the controls, and the correct arrangement of the trunk with respect to mirrors and glasses of the auto, in order to drive always with the same custom references.

In case of the stroke of the slide on the rail, being the rail integral with respect to the chassis, the references of relative position of the slide with respect to the rail or with respect to the chassis are the same. Then, it is the same, for the purpose of the present invention, to carry out a measurement of the position of the slide with respect to the chassis or with respect to the rail.

In possible exemplary embodiments, the first and the second sensor portions of the slide sensor are selected from the group consisting of:
- a distance sensor integral to the slide and a respective of integral to the chassis or to a rail, in particular a portion of chassis or of the rail or a target element connected to the chassis or to a rail;
- a distance sensor integral to the chassis or to a rail and a respective target portion integral to the slide, in particular a portion of slide or a target element connected to the slide.

In particular, the distance sensor can be integral to the rail, and the target portion can be a portion of the slide. Alternatively, the distance sensor can be integral to the slide, and the target portion can be a portion of the rail.

According to the invention, the slide sensor is an optical sensor, configured to emit electromagnetic signals in the visible, infrared or UV range, in particular laser radiations, causing the radiations to corss a portion of air substantially without obstacles set between the first and the second portion, and for determining the distance according to radiations received.

This way, the distance between the first and the second sensor portion is carried out with such radiations, and then visible between the two portions of sensor, avoiding parts slidingly engaging or contacting each other, thus reducing the complexity of the measure.

In a possible embodiment of the invention, the sensor is an optical sensor configured to emit radiations and to measure said distance with a principle selected from the group consisting of: time of flight, compensation photodetector circuit, triangulation.

In a possible embodiment of the invention, the first sensor portion comprises an emitter and a receiver, configured respectively for emitting and receiving a light beam, and the second sensor portion is a reflective element or a reflective portion arranged to reflect, towards the receiver, the light beam coming from the emitter.

In an alternative embodiment of the invention the first sensor portion comprises at least one optical fibre configured to emit a light beam towards the second sensor portion. The optical fibres, preferably a double optical fibre, allows emitting the radiations and receiving reflected radiations, transmitting them respectively to a remote unit, for example integral to the chassis or to a rail or to the slide in positions of minimum encumbrance.

In alternative solutions, the optical sensor, direct or with optical fibres, has the emitter and the receiver arranged respectively in the first and in the second sensor portion, or vice-versa, and aligned to each other so that the radiations emitted by the emitter are received by the receiver, thus allowing to compute the distance.

In a further embodiment not in accordance with the invention the first sensor portion is an inextensive cable and the second sensor portion is a transducer rotational-linear configured to transforming the linear movement of the end of the wire into a proportional electric signal. Such solution alternative to that optic, makes it possible to obtain a distance signal or angular rotation according to the rate of svolgiment/winding the wire with respect to a drum, of which is determined the position.

In still another embodiment of the invention, at least one among the first and second sensor portion comprises an emitter and a receiver, the emitter configured to emit an acoustic or ultrasonic perturbation, for causing to the perturbation to cross a portion set between the first sensor portion and the second sensor portion, and for determining the distance according to an perturbation received by the receiver after the crossing. Such solution, alternative to that optic, allows measuring the distance between the first and the second portion in a precise way providing a space of air free between them. The emitter and the receiver can be arranged both on the first or second sensor portion, and in this case the other sensor portion is a reflective portion, or can be arranged on the first and on the second sensor portion, or vice-versa.

In a further exemplary embodiment not in accordance with the invention the slide sensor is a sensor of magnetic type, configured to measure changes of magnetic flow generated by a magnet and to generate an electric pulse that defines the position. In still another exemplary embodiment, the first sensor portion is an linear-magnetic encoder and the second sensor portion is a magnet. In a further exemplary embodiment the first sensor portion is an linear encoder and the second sensor portion is a rotating and/or translating axis associated with the first sensor portion. These solutions, alternative to the optic measurement, allows measuring the distance or the rotation in a precise way.

In a similar way as above, the height of the seat with respect to the chassis, and the reclination of the seatback with respect to the seat can be adjusted manually, arranging similar height sensor portions with respect to the chassis and on the seatback with respect to the seat, and providing a signalling unit configured to:
- store a preferred position in height of the seat with respect to said chassis or to the slide or to a rail, or of adjusting the reclination of the seatback with respect to the seat, selected by a user between possible respective intermediate positions;
- measuring a relative movement caused manually by said user between seat and chassis or between seatback and seat;
- comparing the distance signal determined by said slide sensor in an actual position of the seat with respect to the chassis or the seatback with respect to the seat with a respective value of distance of at least one preferred position;
- emitting a notification signal directly to the user when the actual position is coincident with the preferred position.

This way, to the user directly two or three position signals of the seat can be provided stored when the user is adjusting manually the respective movement of the seat, for example stroke and height, stroke and reclination, stroke and height and reclination.

According to another aspect of the invention, a system is configured to provide manual repositioning of a seat for a car, as a seat of new production, a seat already built, a seat already mounted to a vehicle in circulation, made as above defined.

According to a further aspect of the invention, in a seat as above defined a seat height sensor having a first sensor portion and a second sensor portion, where the first sensor portion is integral to the seat and the second sensor portion is integral to the slide, the seat height sensor configured to measure the distance between the first and the second sensor portions in any position of the seat with respect to the slide. Furthermore, the following are provided: a control unit connected logically to at least one among the first and second portion of the seat height sensor for receiving by the latter a distance signal proportional to any position of the seat with respect to the slide; a memory unit configured to store a distance signal in at least one preferred position selected by a user between any position of the seat with respect to the slide; a signalling unit configured to compare the distance signal determined by the seat height sensor in an actual position of the seat with a distance signal of the at least one preferred position and for emitting a notification signal to the user when the actual position is coincident with the preferred position, the signalling unit comprising a signalling element selected from the group consisting of: an acoustic emitter, a light emitter, a display with a shield depicting at least one position indicator, a vibrotactile emitter, and configured to emit said notification signal and to send it directly to the user respectively in a acoustic, visible, vibrotactile way or a combination thereof.

According to still another aspect not in accordance with the invention, in a seat as above defined at least one seatback reclination sensor is provided having a first sensor portion and a second sensor portion, where the first sensor portion is integral to the seatback and the second sensor portion is integral to the rotation axis, the seatback reclination sensor configured to measure the angular rotation between the first and the second sensor portions in any angular position of the seatback with respect to the rotation axis. Furthermore, the following are provided: a control unit connected logically to at least one among the first and second portion of the seatback reclination sensor for receiving by the latter a distance signal proportional to any angular position of the seatback with respect to the rotation axis; a memory unit configured to store a distance signal in at least one preferred position selected by a user between any angular position of the seatback with respect to the rotation axis, a signalling unit configured to compare the distance signal determined by the seatback reclination sensor in an actual position of the seatback with a distance signal of the at least one preferred position and for emitting a notification signal to the user when the actual position is coincident with the preferred position, the signalling unit comprising a signalling element selected from the group consisting of: an acoustic emitter, a light emitter, a display with a shield depicting at least one position indicator, a vibrotactile emitter, and configured to emit said notification signal and to send it directly to the user respectively in a acoustic, visible, vibrotactile way or a combination thereof.

In still another aspect of the invention, for a seat as above defined, a system provides manual repositioning comprising at least one slide sensor having a first sensor portion and a second sensor portion, where the first sensor portion is integral to the slide and the second sensor portion is integral to the chassis or to a rail, the slide sensor configured to measure the distance between the first and the second sensor portions in any of the plurality of positions of the slide on the rail; a control unit connected logically to at least one among the first and second portion of the slide sensor, the control unit configured to receive by the slide sensor a distance signal proportional to one of the plurality of positions; a memory unit configured to store a distance signal in at least one preferred position selected by a user among the plurality of positions; a signalling unit configured to measure a relative movement between the slide and the rail, comparing the distance signal determined by at least one slide sensor in an actual position of the slide with a distance signal of at least one preferred position and for emitting a notification signal when the actual position is coincident with the preferred position. The slide sensor comprises an emitter selected from the group consisting of: an emitter configured to emit an electromagnetic signal in the visible range, infrared or UV, in particular laser radiations, and causing the radiations to cross a portion of air substantially without obstacles set between the first portion and the second sensor portion, and for determining the distance according to radiations received after the crossing;
an emitter configured to emit an acoustic or ultrasonic perturbation, for causing the perturbation to cross a portion of air substantially without obstacles set between the first portion and the second portion, and for determining the distance according to a return perturbation received after the crossing.

In this further aspect, in case of optical sensor, the first sensor portion comprises an emitter and a receiver, configured respectively for emitting and receiving a light beam, and the second sensor portion is a reflective element arranged to reflect, towards the receiver, the light beam coming from the emitter. Alternatively, the first sensor portion comprises at least one optical fibre configured to emit a light beam towards the second sensor portion, the second sensor portion being an optical fibre arranged to receive the light beam emitted by the first portion.

### Brief description of the drawings

Further characteristic and/or advantages of the present invention will be made clearer with the following description of an exemplary embodiment thereof, exemplifying but not limitative, with reference to the attached drawings in which:
- Fig. 1 shows an elevational side view of a car seat, according to a first aspect of the invention, comprising a system of manual repositioning of the horizontal stroke of the car seat;
- Fig. 1A shows an enlarged view of the zone of the emitter of Fig. 1;
- Fig. 2 shows an elevational partial front view of the seat of Fig. 1 in the zone of the emitter;
- Fig. 3 shows an elevational side view of a car seat, according to another aspect of the invention, comprising a system of manual repositioning of the height of a car seat;
- Fig. 3A shows an enlarged view of Fig. 3 in the zone of application of a sensor of height;
- Fig. 4 shows an elevational front view of the invention in an exemplary embodiment of the invention obtained as combination of the exemplary embodiments of Fig. 1 and of Fig. 3;
- Fig. 5 shows a top plan view of the seat of Fig. 3;
- Fig. 6 shows an enlarged view of the support zone of the emitter of Fig. 5;
- Fig. 7 shows a side view of a car seat, according to a further aspect of the invention, comprising a system of manual repositioning of the longitudinal stroke of a vehicle seat like that of Fig. 1 or 4, also comprising a system of manual repositioning of the reclination of the seatback;
- Fig. 8 shows a further aspect of the invention, in an elevational front view of a vehicle seat comprising a system of manual repositioning of the reclination of the seatback;
- Fig. 9 shows an enlarged view of the zone of application of the sensor of manual repositioning of the reclination of the seatback of Figs. 7 or 8;
- Fig. 10 shows an example of monitor connected to the control unit for the repositioning system according to the invention;
- Fig. 11 shows a block diagram of a control unit for the system of manual repositioning according to the invention;
- Fig. 12 shows a side view of a possible general exemplary embodiment of a vehicle seat comprising a system of manual repositioning of a seat according to the invention;
- Figs. 12A, B, C, D show exemplary embodiments of the system of Fig. 12, with signalling means directed to the user respectively comprising an acoustic emitter, a light emitter, a display with a shield depicting at least one position indicator, a vibrotactile emitter, and configured to emit said notification signal and to send it directly to the user respectively in a acoustic, visible, vibrotactile way;
- Fig. 13 shows a possible exemplary embodiment of a slide sensor mounted on the rail and capable to see the slide in various positions of stroke on the rail;
- Fig. 14 and Fig. 14A show a first and a second possible flow-sheet of the control unit for defining a preferred position of a seat and for manual repositioning;
- Fig. 14B shows an exemplary embodiment of the flow-sheet of Fig. 14A for defining a preferred position of the seat for different users;
- Figs. 15, 15A show an exemplary embodiment of a vehicle seat comprising an exemplary embodiment of a seat height sensor with respect to which shown in Fig. 3;
- Figs. 16, 16A show a side view of an exemplary embodiment of a seat height sensor with respect to that shown in Fig. 3 and 15, 15A compriseste a seat height sensor of type transducer linear;
- Figs. 17, 17A show a side view of a further exemplary embodiment of a seat height sensor with respect to that shown in Fig. 3 and 15, 15A and 16, 16A, comprising a laser sensor;
- Figs. 18-18A-18B show according to two side views and a front view, exemplary embodiments of the invention comprising an exemplary embodiment of a seatback reclination sensor alternative to that of Figs. 7-9;
- Figs. 19, 19A show a top plan view of an exemplary embodiment of a slide stroke sensor with respect to that shown in Fig. 1 and comprising a slide sensor with an inextensible cable carried by a drum controlled in a desired position and with elastic recovery;
- Figs. 20, 20A show a top plan view of a further exemplary embodiment of a slide stroke sensor alternative to that shown in Fig. 1 and comprising a slide sensor of magnetic type;
- Figs. 21, 21A show a top plan view of a further exemplary embodiment of a slide stroke sensor alternative to that shown in Fig. 1 and comprising a slide sensor in the form of a laser sensor;
- Figs. 22, 22A show a top plan view of a further exemplary embodiment of a slide stroke sensor with respect to that shown in Fig. 1 and comprising a slide sensor with a piston linear transducer.

### Description of some preferred exemplary embodiments

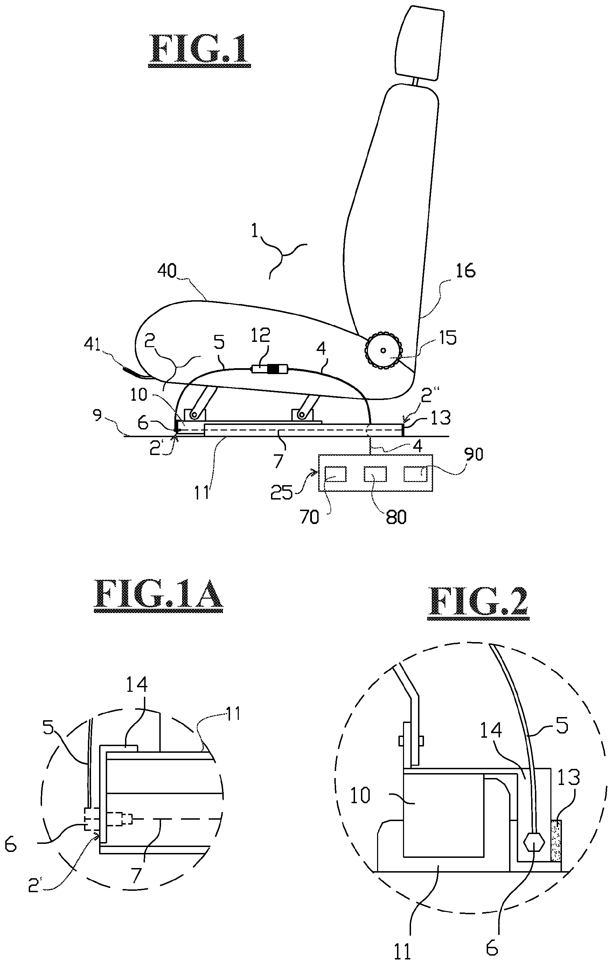

With reference to Fig. 1, 1A and 2, a vehicle seat 1 comprises, in a known way, a rail 11 integral to a chassis 9, a slide 10 configured to carry out an adjustment stroke along rail 11 between a first position and a second position, crossing a plurality of intermediate positions of said rail 11, a seat 40, which can be configured to move relatively with respect to slide 10 with at least one component of movement orthogonal to the chassis 9, and a seatback 16 pivotally connected to seat 40 for adjusting the reclination.

The stroke of slide 10 along rail 11 can be carried out in a known way for example pushed by the legs of the user after unlocking the seat by lever 41, or by means of other known mechanisms, either mechanical or electric. The lifting/ lowering of seat 40 can be made through a cam or jack lever of known type not shown or by means of other known mechanisms, either mechanical or electric. The reclination of the seatback 16 can be made for example by a knob 15, or by a lever or other mechanical or electric mechanism of known type.

Obviously, types of seat also exist that allow only the adjustment of the stroke, or of the stroke and of the height, or of the stroke and of the reclination, to which in a way equivalent the invention is applicable, limitedly to the actual adjustment type, described below in various possible exemplary embodiments.

In a first possible embodiment of the invention, a system of manual repositioning of the longitudinal stroke of a vehicle seat 1, which can be integrated in a vehicle seat 1 or can be retrofitted to a preexisting vehicle seat 1, comprises at least one slide sensor 2 having a first sensor portion 2' and a second sensor portion 2", where first sensor portion 2' is integral to slide 10 and second sensor portion 2" is integral to rail 11 and to chassis 9, on which the rail is rigidly mounted. Obviously, an exchange between portions of sensor 2' and 2" with respect to rail 11 and a slide 10 can be easily implemented by a skilled person and then its description is omitted.

Slide sensor 2 is configured to measure the distance between the first 2' and the second 2" sensor portion in any of the positions of slide 10 on rail 11. A control unit 25 comprises a processing unit 70 connected logically to at least one among the first and second sensor portion 2', 2" of slide sensor 2, and configured to receive by slide sensor 2 a distance signal proportional to one of the plurality of positions. Furthermore, control unit 25 can comprise a memory unit 80 configured to store a distance signal in at least one preferred position selected by a user among the plurality of positions.

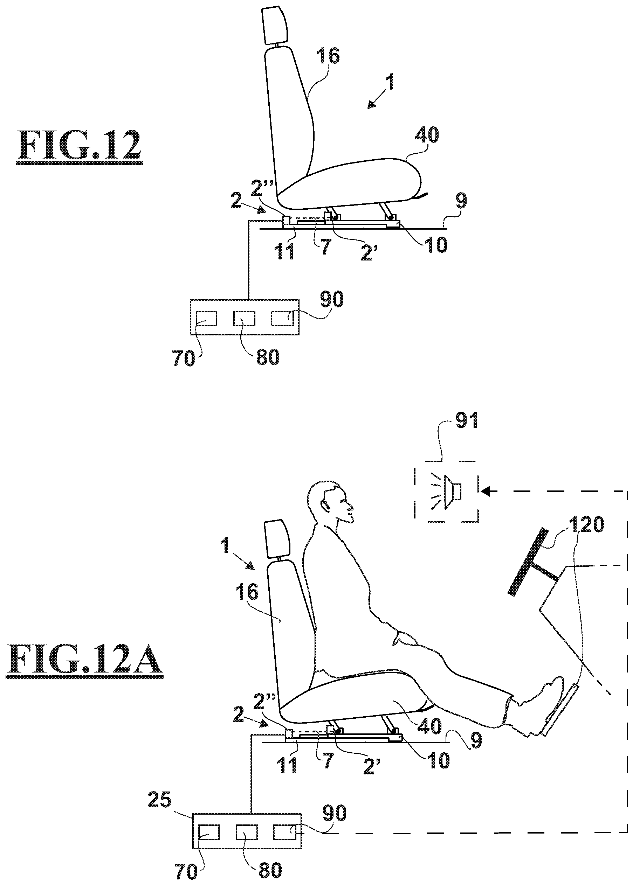

Control unit 25 also can comprise a signalling unit 90 configured to read the preferred position of slide 10 with respect to rail 11, i.e. with respect to the chassis 9, as selected by a user among the intermediate positions, to measure a relative movement caused manually by the user between slide 10 and rail 11; to compare the distance signal determined by slide sensor 2 in an actual position of slide 10 with a distance signal of at least one preferred position, and to emit a notification signal (for example in a way similar to what described below with reference to Figs. 12A to 12D), directly to the user that is causing manually the stroke of vehicle seat 1 on rail 11 when the actual position is coincident with the preferred position.

With reference also to Fig. 1A and to Fig. 2, slide sensor 2 can comprise a photoelectric sensor 12, equipped with a source of electromagnetic radiations, for example laser light, connected to a wire 5 comprising an optical fibre having at one end an emitter 6 located at first sensor portion 2'. The end emitter 6 irradiates a beam of radiations 7, for example laser radiationtowards second sensor portion 2", for example a reflective plate 13, in particular of aluminium or other reflective material, or simply a portion of rail 11. The radiations reflected by second portion 2", for example by plate 13, represents a return signal to calculate the exact actual distance.

The variation of this distance represents the variation of the distance of the driver from the steering means (see reference 120 in Figs 12A-12D) which can be operated both by the feet, like friction, brake, accelerator, and with the hands, like steering wheel, gear, arrows, luci, dashboard buttons, radio, etc., and is therefore very relevant for a correct drive and has to be adjusted with care by the user.

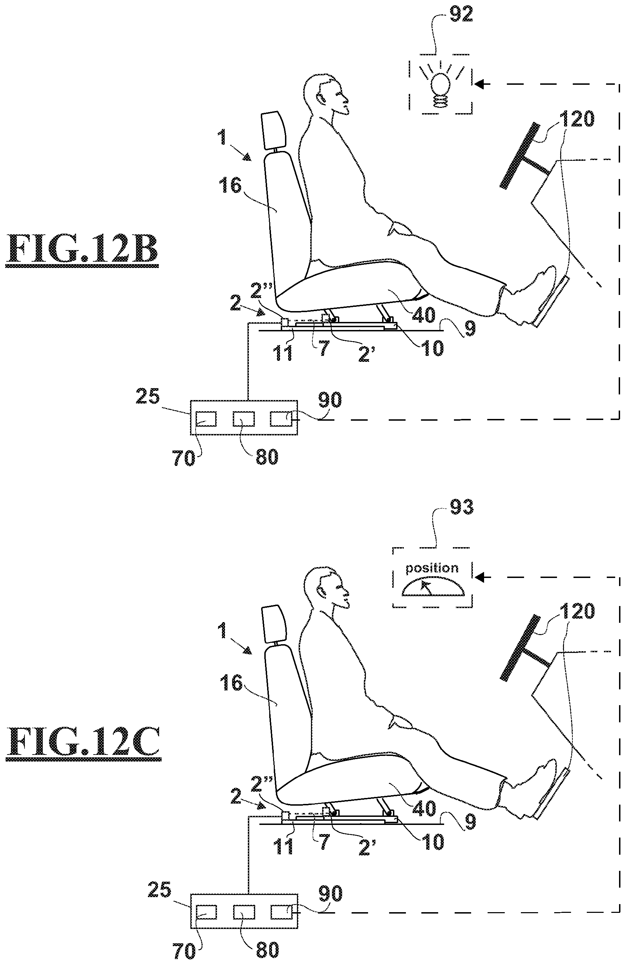

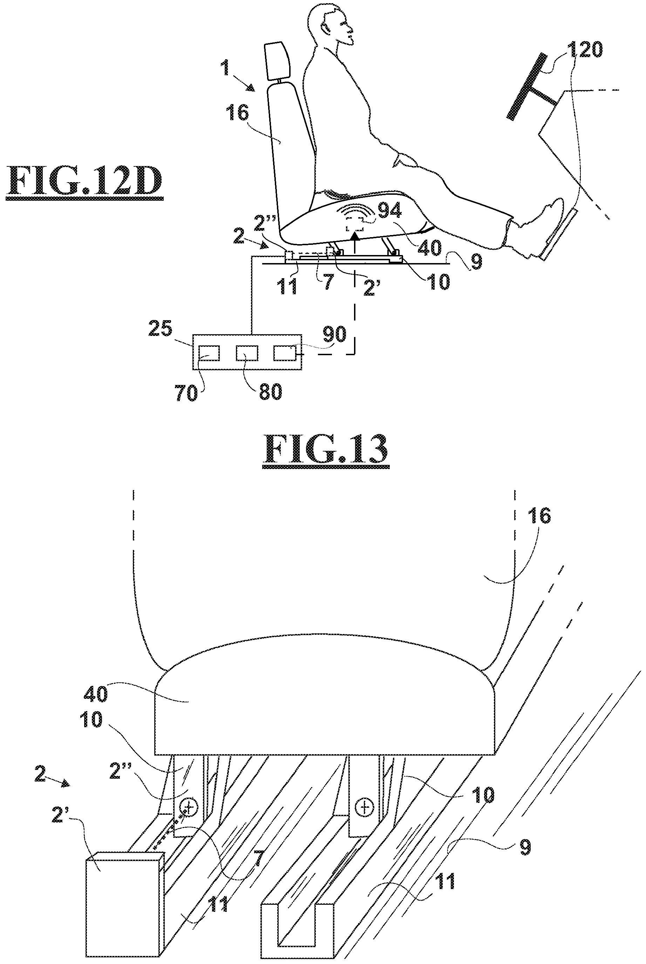

The distance can be computed with known systems, described as an example below, with reference to Fig. 12, in a way easily implemented by a skilled person with components easily available on the market, and which can be applied to all the exemplary embodiments of the present invention which provide an optical detection of the distance.

With reference to the detailed partial view of Fig. 1A, the end emitter 6 can be for example connected to rail 11 on which slide 10 slides, by a terminal support 14, integrated or retrofitted to rail 11. Photoelectric sensor 12 can be supplied by a battery, for example the battery of the vehicle or an autonomous battery, and connected by a wire arranged for power supply/transmission of data 4 to control unit 25. The connection to control unit 25 can also be wireless, with protocols known and not described in detail since easily implemented by a skilled person. In possible embodiments control unit 25 can be either an electronic unit integrated with sensor 12, or separated from it and connected wireless. Control unit 25 can also be integrated with a control board of the vehicle or in the computer system of the vehicle that administers all the functions of the vehicle and can be accessible by the user.

In a possible embodiment, the activation of the measurement of the distance can be carried out manually, by an easily accessible on/off switch not shown since obvious for a skilled person, which can be located on control unit 25 or on photoelectric sensor 12 in a way easily accessible to the user, or in the control board of the car. Alternatively, a detector of relative movement between rail 11 and slide 10 can be provided, which activates automatically the measurement and keeps it turned on for the time necessary to the user for repositioning the seat, for example a minute.

The above described exemplary embodiments implementing the control unit and the measurement associated to it, as described with reference to Fig. 1, can be easily extended by a skilled person to all the exemplary embodiments of the invention described below, mutatis mutandis, and then the description thereof is omitted.

In a simplified version of the invention, control unit 25 can comprise, as signalling unit 90, a simple display unit connected to the processing unit 70 and in which the user reads the position of the stroke of slide 10 on rail 11. This way, the user can adjust the position of the vehicle seat 1 always to the desired position, which the user same remembers as that customarily used. In this case, then this embodiment of the invention is limited to the optical sensor of the position of the stroke of the slide along the rail, to the processing unit 70 and to the display 90 that displays the distance, without a memory unit 80 and without any comparison between the stored position and the actual position. Such simplified version is applicable also to the measurement of the height of the seat and of the reclination of the seatback, or a combination thereof as described below. In case of multiple measurements, stroke+height, stroke+reclination, stroke+reclination+height, etc., the display can show the respective measurements with a letter accanto, i.e. I, H, I for stroke, height, reclination, respectively.

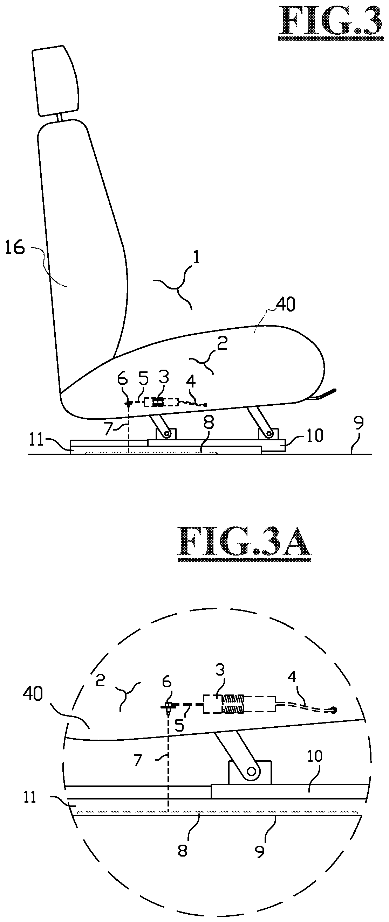

With reference to Fig.3 an exemplary embodiment is shown integrative or alternative of a vehicle seat 1 comprising a position sensor 2. In particular, the position sensor 2 comprises an optical sensor 3, for example a photoelectric sensor, which can be connected to a supply battery to 12V or other voltage (not shown in the figures) by a wire 4 arranged for electric supply/ data transmission. Photoelectric sensor 3, for example providing a laser radiation, can convey the radiation to an emitter 6, by an optical fibre 5, and than projecting forward a radiation 7 on a reflective element 8, for example a reflective strip, for example of aluminum or other reflective material, or a portion optically reflective of chassis 9, or of rail 11, or of slide 10 or other parts of the frame of the vehicle. The return signal, reflected by the reflective element 8, makes it possible to calculate the exact height of the seat 40 with respect to rail 11, i.e. to chassis 9 to which the latter is steadily fastened.

With reference to Fig.3A an enlarged view is shown of the system of manual repositioning 2 of the height of seat 40. The photoelectric sensor 3 is connected to the battery to 12V, or other voltage, (not shown in the figures) by a wire arranged for feeding/transmission data 4, and owing to the wire to optical fibre 5 and at the end emitter 6, conveys radiations 7, for example a laser beam, on the reflective element 8, whose return signal allows measuring the height of seat 40 with respect to the chassis 9, or with respect to slide 10 or to rail 11.

In a way not shown, the sensor 3 can be connected to the control unit, in a similar way as described for Figs. 1 and 2 with reference to the measurement of the stroke.

Obviously other alternative embodiments can be obtained easily by a skilled person by arranging sensor 2 of Fig. 1 and of Fig. 3, as described below. The advantage of this type of solution is of avoiding any contact parts in the measuring zone in all the measuring positions.

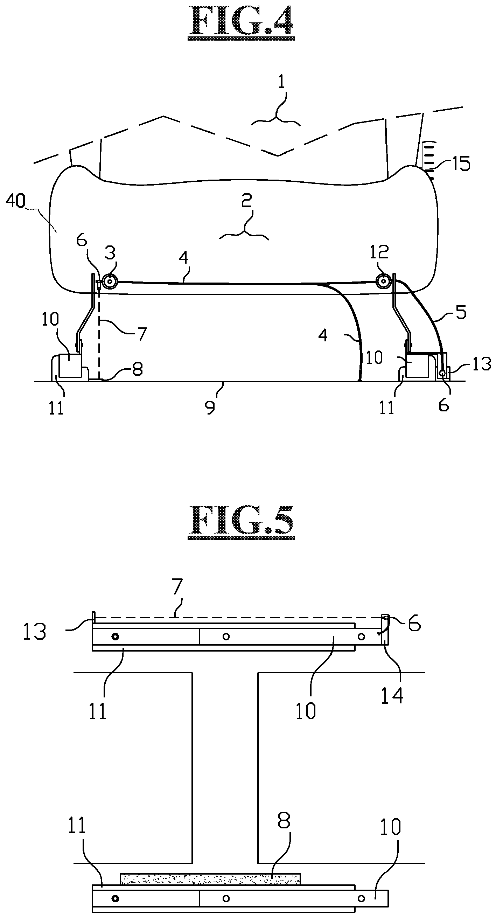

With reference to Fig.4 a front view is shown of a vehicle seat 1 comprising a system of manual repositioning 2 obtained by a combination of the systems of Figs. 1 and 3. It can comprise a photoelectric sensor 3, connected to a battery (not shown in the figures) by wire 4 arranged for electric supply/ data transmission, and associated to an optical fibre (not shown in the figures similar to wire 5 of Figs. 1 and 3) and an emitter 6, which conveys a radiation 7 pointing to a reflective element 8. As it occurs in the example of Fig. 3, the signal returning from reflective element 8 through emitter 6 anf the optical fibre, is detected by sensor 3, making it possible to calculate the exact height of the seat 40 with respect to slide 10 or rail 11, or chassis 9 to which the latter is steadily connected, in a similar way as described for Fig. 3.

The two couples of slides 10 and srails 11 are depicted in Fig. 4, on one couple of which the height is measured as described above, and on the other couple of which the stroke of the seat is measured with respect to chassis 9, by a photoelectric sensor 12 in a way similar to that described for Fig. 1. Also here, an optical fibre, associated with emitter 6 conveys a radiation (not shown in the figures similar to radiation 7 of Fig. 1) on a reflective element 13 or a reflective portion of the rail or of the chassis, and measures the return radiation for determining the distance, similarly as described above..

In a simplified embodiment of the invention, a simple measurement of the height and/or of the stroke can be displayed to the user, as above described.

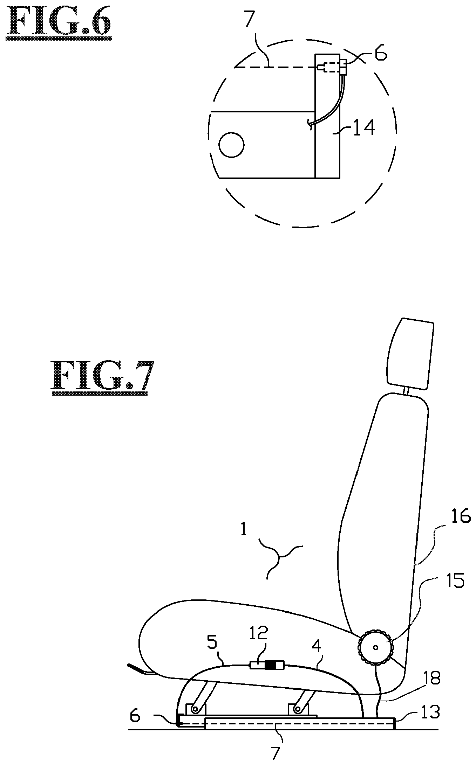

In Fig. 5 a top plan view is shown of the two slides 10 and rails 11, with a support 14 for the end emitter 6 of the radiation 7 pointing towards a reflective plate 13, for example of aluminum or other reflective material (in this case seen from the above), while below reflective strip 8 is shown, for example of aluminum or other reflective material, which is arranged horizontally, which also represent a possible exemplary embodiment of the system. In Fig. 6 an enlarged view is shown of the terminal support 14 of the end emitter 6 capable of conveying light beam 7.

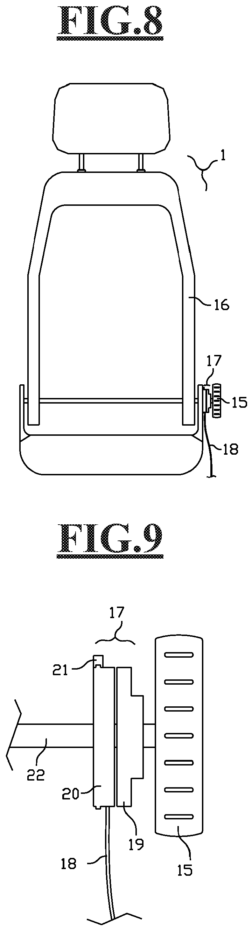

In Fig. 7, in combination with a solution to similar that of Fig. 1 (of which the description is omitted), and in Fig. 8, independently, a common vehicle seat 1 is depicted providing a knob 15 for the adjustment of the reclination of the seatback 16, at which a transducer of angular position 17 has been arranged for calculating precisely the reclination angle that is transmitted as reclination parameter, for example through a electric supply/data transmission wire 18, to a control unit (not shown in the figures), similar for example to that described with reference to Fig. 1 as 25. It is also possible a simplified version of the control unit, configured to provide only the reclination measurement which is displayed to the user who remembers the preferred value and sets the reclination at that value.

In Fig. 9 a detailed viev is shown of an embodiment of and electromagnetic transducer of angular position 17 associated to adjustment knob 15, comprising a rotor 19, a stator 20, a terminal 21 connected to the electric supply/data transmission wire 18, as well as the axle 22 about which seatback (not shown in the figures) rotates.

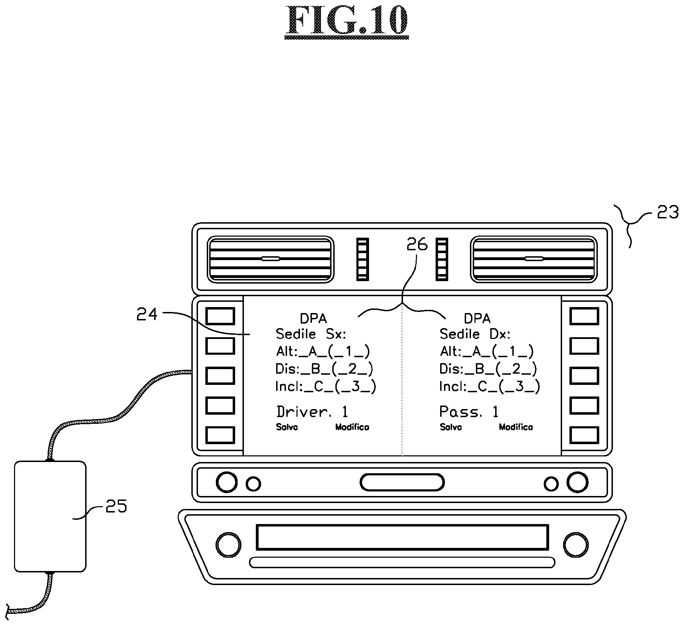

In Fig. 10 a dedicated adjustment dashboard 23 is depicted, which can be a real device or a virtual image displayed on a monitor of the vehicle dashboard, in whose display 24 data transmitted by control unit 25 are shown, with reference to the exemplary embodiments described above or below, or a combination thereof, concerning all the many signals coming from the sensors and from the transducer of angular position (all not shown in the figure), as well as the different stored parameters of manual repositioning 26 preferred by the driver (left seat) or of the passenger (right seat). To assist the user in recovering its data, in addition to depicted values, the system can emit also a confirmation "BIP" or voice or light signal, when the position adjusted manually by the user has achieved the stored preferred value. In a simplified version of this embodiment, there are not preferred stored values, and the user can simply read the actual values and remember the preferred values at which he/she stops the manual adjustment.

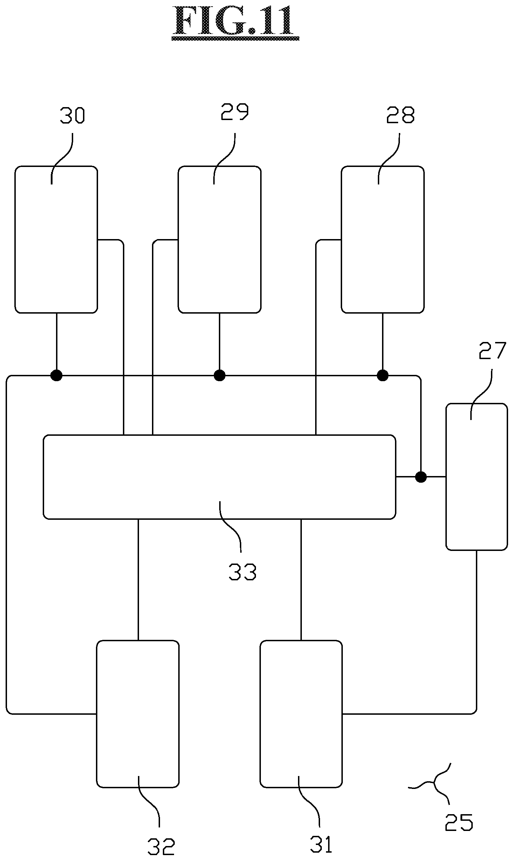

In Fig. 11 a possible block diagram is shown of a control unit 25, with reference to a preferred exemplary embodiment above described, as well as those described hereinafter, or a combination thereof, whose object is to supply the sensors, for example the sensors 12, 3, 17 of stroke, height, reclination above described of the system and associated to the seat, to receive the sensed data relative to the distance of the seat from the pedals, to the height of the seat with respect the chassis, and to the reclination angle of the seatback, of storing the data preferred by the user, and to send them finally to a display or a dashboard like that depicted in Fig. 10, or a simpler display or other notification unit accessible by the user.

In a possible embodiment the control unit, always with reference to Fig. 11, can comprises at least one of the following blocks.

A block 27 - (Power Supply) which provides the feeding to all the circuits present on board of control unit 25 same and to each sensor of the seat, like 3,12,17 already described with reference to a preferred exemplary embodiment above described, starting from respective input voltages, for example set between 8V and 30V (DC), which is the voltage typically observable on the electric network of a vehicle (nominal value 12 V (DC)) and on the electric network of a campervan or of a truck (nominal value 24 V (DC)).

A block 28 and a block 29, which are interfaces towards the two optical sensors, like laser radiation distance sensors, present in the seat (for example sensor 12 of Fig. 1 and the sensor 3 of Fig. 3, not shown in figure 11), through which they are supplied and through which said sensors send the relative data of manual repositioning of the and/or actual relative position of the seat parts.

A block 30, which is an interface of the sensor angular (for example The sensor 17 of Figs. 8 and 9, not shown in figure 11), through which it is supplied and through which said sensor send the relative data of reclination of the seatback.

A block 31, which is an interface through which control unit 25 receives the feeding and through which are inviated, and then displaysted, the data of manual repositioning of the and/or the seats from display on the display or on the cruscotto.

A block 32 - (EEPROM), which is a non-volatile memory unit for saving the parameters of manual repositioning that do not have to be erased when the supply voltage to control unit 25 is turned off.

A block 33 - (MCU), which is a microcontroller where the firmware that administers all the functions is stored.

With reference to Fig.12, in a more general exemplary embodiment of the invention, an example is shown of a vehicle seat 1 comprising a slide sensor 2 for measuring the longitudinal adjustment travel of the seat. In particular, slide sensor 2 has a first sensor portion 2' integral to slide 10 and a second sensor portion 2" integral to chassis 9 or to a rail 11.

First sensor portion 2' can be an optical sensor, configured to emit an electromagnetic signal in the visible range, infrared or UV, in a similar way as described above. In particular, sensor 2 can emit a laser radiation and is configured to cause the radiations to cross a portion of air substantially without obstacles set between the first and the second portion 2' and 2", and for determining the distance therebetween according to radiations received after the crossing. In a possible embodiment, second sensor portion 2" can be a reflective portion or a portion of the seat having enough reflective capacity.

Among the modes of detection and distance calculation, any of the following for example can be used: time of flight, triangulation, compensation photodetector circuit. In particular, in the first and second case a common laser telemeter operating according to such principles, namely time of flight or triangulation, can be used. In the third case a measuring sensor can be used as described in EP3312576 of Trinamix. In case of optical fibres a sensor can be used like XperYenZ^{™} of Trinamix, or Omron E3NX.

In an alternative embodiment, one among the first 2' and second 2" sensor portion comprises an emitter and a receiver, and the emitter is configured to emit an acoustic or ultrasonic perturbation, for causing the perturbation to cross a portion of air substantially without obstacles set between the first 2' and the second 2" portion, and for determining the distance therebetween according to an perturbation received by the receiver after the change of the length of the portion of air between the two portions, to this purpose many types of distance sensors of ultrasonic or photoelectric or laser radiation type can be used existing on the market. Also any of the above described sensors of the previous paragraph can be used.

Other types of distance sensors are possible as described below.

Always according to an exemplary embodiment general of the invention, control unit 25 comprises a processing unit 70 logically connected to at least one among the first 2' and second 2" sensor portion, and receives from slide sensor 2 a distance signal proportional to a plurality of positions that the slide can have in its travel longitudinal along the direction rail. Furthermore, a memory unit 80 is configured to store a distance signal in at least one preferred position selected by the user among the plurality of positions. Finally, a signalling unit 90, is configured to measure a relative movement between slide 10 and rail 11 caused manually by the user, and for comparing the distance signal determined in an actual position of slide 10 with a distance signal of at least one preferred position and for emitting a notification signal to the user when the actual position is coincident with the preferred position.

In a simplified version, in a similar way as described above, the memory unit 80 cannot be provided, and the signalling unit 90 can be a simple display. In this case the user can adjust the position of the vehicle seat 1 always to the desired position, which the user same remembers as that customarily used, and stops the adjustment at reading the desired value on the display 90.

Concerning the possible sensory channel of signalling to the user, as shown in Figs. 12A to 12D, which are similar to the general embodiment of Fig. 12, but which can be applicable to any of the embodiments of the present invention descibed above and below, both for the adjustment of the stroke, and of the height as well as of the reclination, which permit the user to achieve an optimal position with respect to steering organs 120 of the vehicle, the signalling unit 90 can comprise a signalling element selected from the group consisting of: an acoustic emitter 91 (Fig. 12A), a light emitter 92 (Fig. 12B), a display 93 with a screen depicting at least one position indicator (Fig. 12C), a vibrotactile emitter 94 (Fig. 12D), and configured, in the respective cases, for emitting the notification signal and to send it directly to the user respectively in an acoustic, visible, vibrotactile way or also combination thereof (not shown but that can be easily implemente by a skilled person).

By the invention, then, even with a vehicle seat 1 adjustable only manually, or with electromechanic adjustment without control of position, it is possible to memorize the position of the vehicle seat 1 and return to such memorized position. This is allowed by the measurement of the change of position and the direct transmission to the user of the signal of achievement of the memorized position, while the user is operating manually the adjustment of the stroke, of the height or of the reclination of the seat.

With reference to Fig. 13, in an advantageous exemplary embodiment of the invention, for minimizing the costs and the changes to cause to the seat, sensor 2, in particular the first portion 2', can be located in a tail portion of rail 11, in order to see the tail portion of slide 10 while in movement on rail 11. Sensor 2 can be optical or to ultrasonic pulses, of the types above described. Sensor 2, thus conceived can also not require that on slide 10 reflectors or portions of sensor or special target portions are arranged different from the slide same. Obviously in a way not shown, are possible exemplary embodiment of the concept now exposed, for example in head to rail 11 always to looking at the slide 10, or positioning the sensor on slide 10 that typ towards a portion of rail 11 or the chassis 9. Such solution can be used analogously, in a way clear to the skilled person, for measuring the height of the seat, with the sensor that is located for sending the light radiation towards the seat for measuring the height in a similar way as shown in Fig. 3.

In particular, it can be used a single photoelectric device for measuring both the stroke and the height, for example adopting a sensor with two channels, as the sensor Xperienz^{™} of the Trinamix, which makes it possible to connect to a single central unit two different couples of optical fibres. In this case, a couple of optical fibres can be used for measuring the position of the slide and the other couple for measuring the height of the seat with respect to the chassis, in a similar way as shown in Fig. 4. Also a single emitter with two different optical paths can be used, or example using mirrors and a beam splitters can be used, in a way that can be easily implemented by a skilled person.

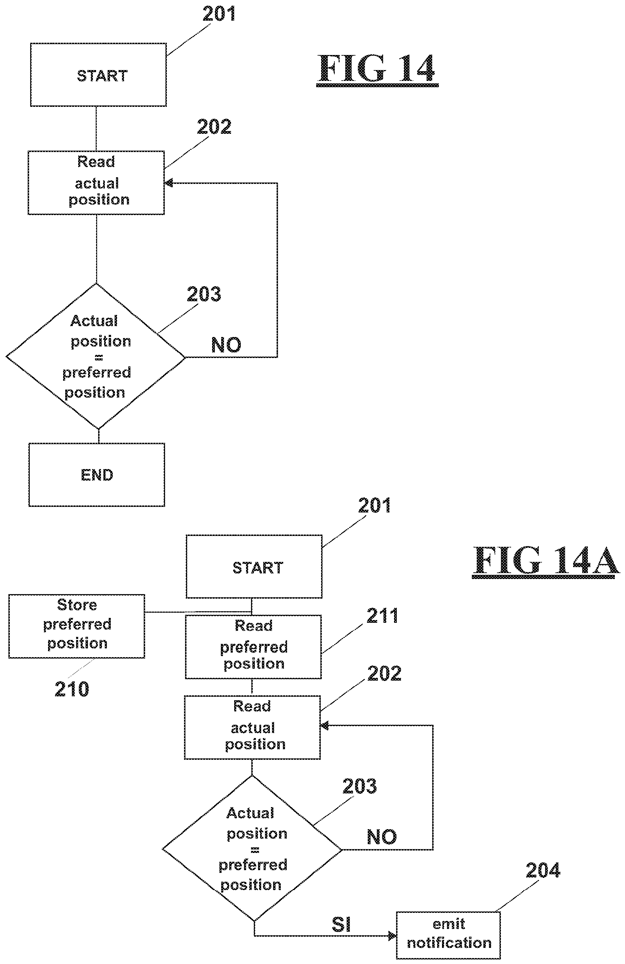

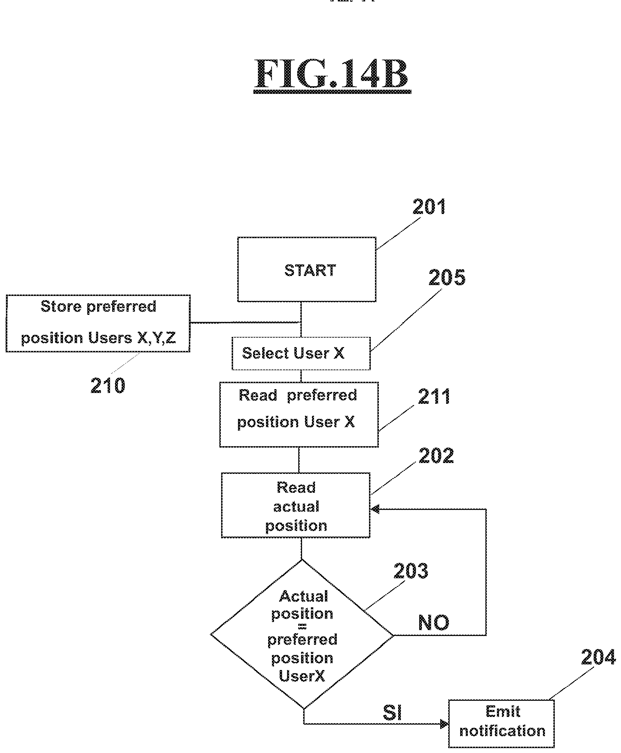

With reference to Fig.14, 14A and 14B, in combination for example with Fig. 1 or Fig. 12, nonche le altre figure qui sopra e sotto descritte, possible flow diagrams are given of the signalling unit 90 of control unit 25. Slide sensor 2, as well as a height sensor o a reclination sensor, as above and below described, can be made active in 201, for example owing to a movement caused manually by a user, or, as described above, with reference to Fig. 1, an operation from the dashboard or by a switch (not shown in the figures), sending a turn-on signal to slide sensor 2 or any other position sensor (height, reclination). The slide sensor, or other sensor, can also be always active and not entering never in stand-by. The signalling unit 90, then, detects the relative movement between slide 10 and rail 11, and reads the actual position, step 202, through the distance signal determined by slide sensor 2 or other position signal.

In a simplified version, as shown in Fig. 14, notification to the user is carried out through the signalling unit 90, for example a display as described above, to the user, which can read directly the measurement and make a comparison, step 203, with the remembered preferred value, and the stopping the adjustment movement once the two values coincide.

As shown in Fig. 14A, a step can be provided of memorization 210 of a preferred position. Then, similarly to the previous case, the control unit reads the actual position 202, i.e. the distance signal, reads the preferred position, 211, and then compares in 203 the preferred position with the actual position. If the actual position corresponds to the preferred position, then a notification signal is emitted 204, i.e. acoustic, visible, display of a numerical value, vibrotactile, etc. like Figs 12A-12D. If instead the actual position does not correspond with the preferred position, the notification signal is not emitted and goes on the reading the position, waiting that the user passes through the preferred position.

With reference to Fig.14B a diagram of flow is given, similar to that of Fig.14A, where, in case of use of the system of manual repositioning by different users, a memorization is provided for each user of an own preferred position, associated each to a profile, for example identified by a name, or a alphanumerical character, or an icon, always stored in the memory unit 80. At the start 201, by a user X present on the seat, a choice, step 205, of the profile X stored in 210 is made, and the search of the manual position by the user X determines a comparison with the actual position of the preferred position X of user X. The system then proceeds with the steps already described with reference to Fig. 14A.

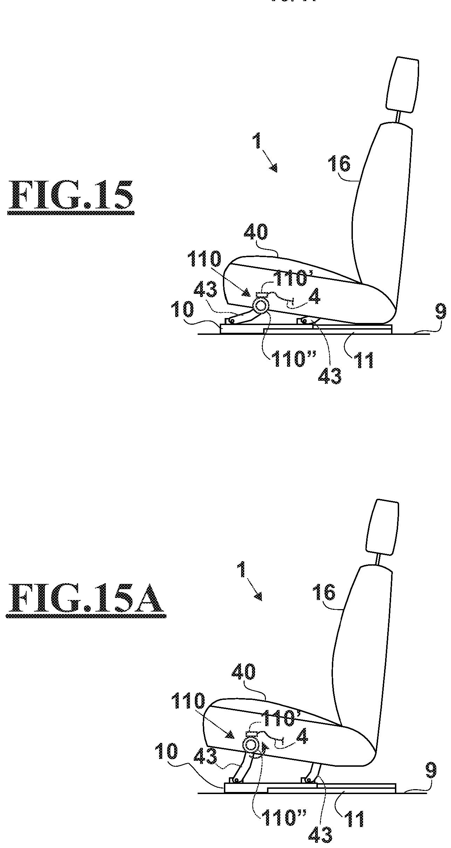

With reference to Fig.15, 15A an exemplary embodiment is given comprising a seat height sensor 110 alternative to that already described for Fig. 3. The seat height sensor 110 has a first portion 110' integral to seat 40 and the second sensor portion 110" integral to slide 10 or to an arm pivotally connencted to slide 10. In particular, the second sensor portion 110" can be an encoder angular magnetic, integral to one end of an articulated arm 43 of the cam or jack mechanism for lifting the seat 40, and the first sensor portion 110' can be for example a magnet.

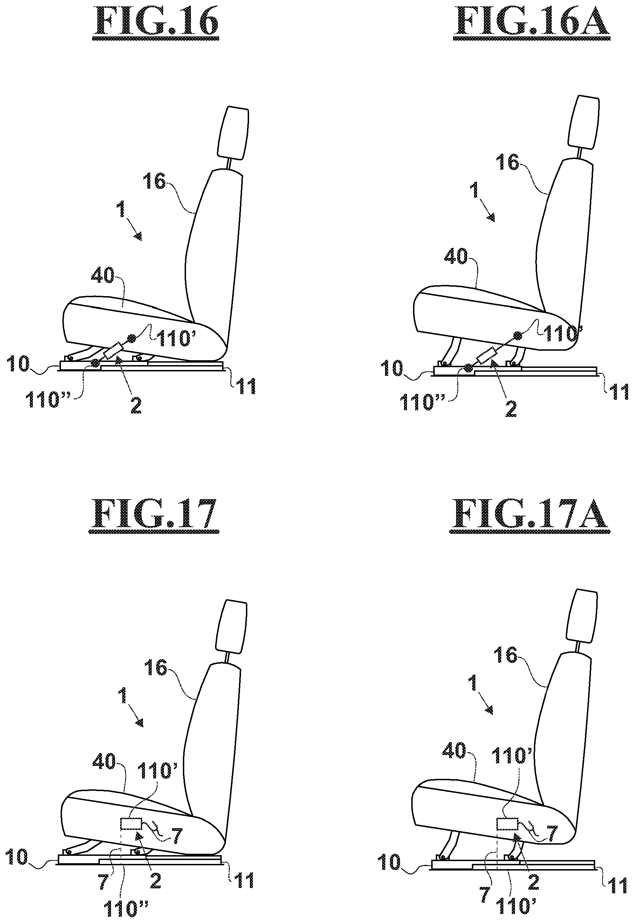

In Figs. 16, 16A, 17, 17A, exemplary embodiments are shown of the height measurement of the seat, respectively with a potentiometer sensor 2 (Fig. 16,16A) or optical/acoustic sensor 2 (Fig. 17,17A) emitting a radiation 7 or an acoustic perturbation 7, to provide a signal of height of the seat in an alternative way to what described for Figs. 15, 15A and for Fig. 3.

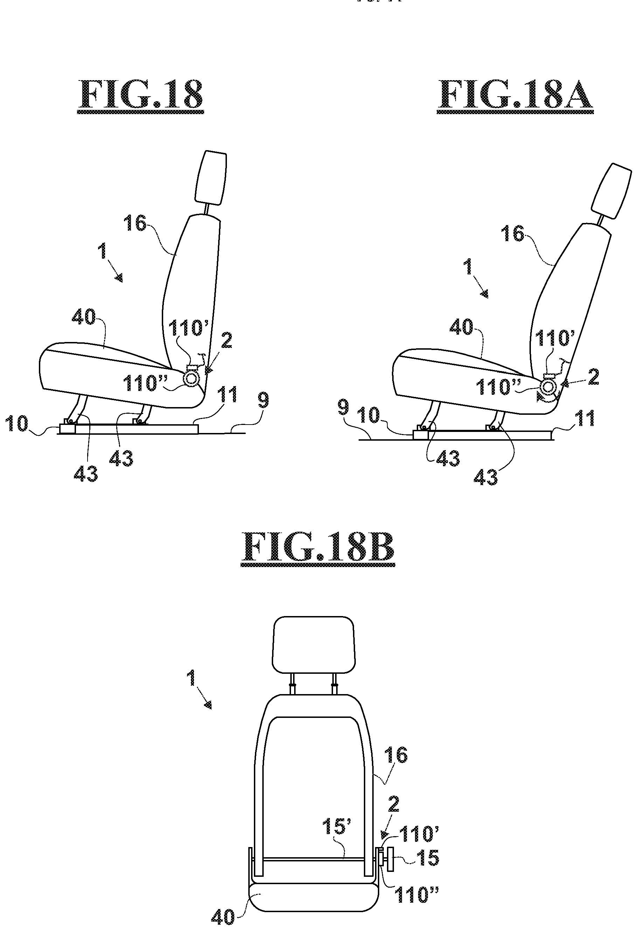

With reference to Fig.18-18A-18B, a sensor is shown of adjusting the reclination of the seatback 2 mounted to a vehicle seat 1, similar to that already described for Figs. 8 and 9. In the embodiment, the seatback reclination sensor can be an encoder angular capacitive, but it can also be an encoder angular magnetic, or an encoder angular optical, or of other kind. In particular, the sensor 2 for adjusting the reclination of the seatback 16 can have a first sensor portion 110' and a second sensor portion 110", where the first sensor portion 110' is integral to the seatback 16 and the second sensor portion 110" is integral to the rotation axis 15' of the seatback. The seatback reclination sensor 2 can be configured to measure the angular rotation between the first 110' and the second 110" sensor portion in any angular position of the seatback 16 with respect to the rotation axis 15'. Then, when the user acts manually with the lever 15 of adjusting the reclination of the seatback 16, the seatback reclination sensor 2 can discretize the angular position of the seatback and send to the processing unit 70 a linear or angular signal or of proportional to any angular position of the seatback 16 with respect to the rotation axis 15'.

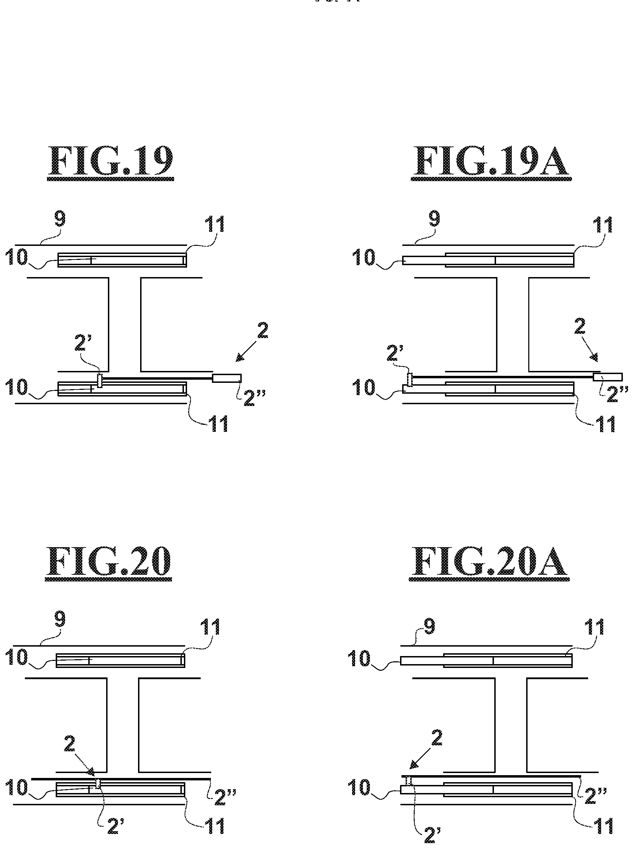

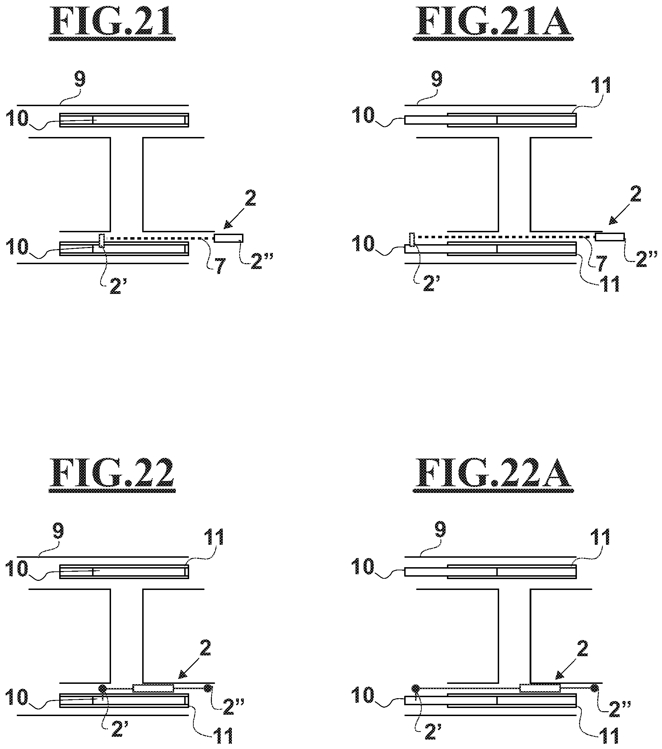

With reference to Fig. 19, 19A, 20, 20A, 21, 21A, 22, 22A respective couples are shown of top plan views of a chassis 9 integral to a rail 11 on which a slide 10 can slide for longitudinal adjustment of a seat 1, similar to that shown in the previous Figures, and analogous to Fig. 5. The whole description above of the features of the invention for the various embodiments are also applicable to these embodiments of the sensors. In particular, a slide sensor 2 of various kind can be configured as:
- a cable length sensor 2 (Fig. 19, 19A)
- a magnetic encoder sensor 2 (Fig. 20, 20A);
- a electromagnetic sensor 2 in the visible range, infrared or UV, or ultrasonic (Fig. 21, 21A);
- a potentiometric distance sensor 2 (Fig. 22, 22A);
that can be used for measuring the distance between the portions 2' and 2" in a way that can be easily implemented by a skilled person.

Other equivalent solutions not shown, but easily implemented by a skilled person, starting for example by the solution of Figs. 20, 20A, can provide an optical sensor on the rail/chassis or on the slide and a optical rail on the slide or on the rail/chassis. In this case, with the movement of the slide on the rail the optical sensor reads the position directly on the optic rail, for example a linear optical encoder that counts transversal lines of different color on a uniform background, providing a position signal to the control unit according to the number of lines counted for each movement.

The foregoing description of some exemplary specific embodiments will so fully reveal the invention according to the conceptual point of view, so that others, by applying current knowledge, will be able to modify and/or adapt in various applications the specific exemplary embodiments without further research as long as thereby not departing from the invention as set out by the claims. It is to be understood that the phraseology or terminology that is employed herein is for the purpose of description and not of limitation.

## Claims

1. Vehicle seat (1) comprising:
- a rail (11) integral to a chassis (9) of said vehicle;
- a slide (10) configured to move along said rail (11) between a first position and a second position of said rail (11) crossing a plurality of intermediate positions of said rail (11);
- a seat (40) configured to move relatively with respect to said slide (10) with at least one component of orthogonal movement to said chassis (9);
- a seatback (16) pivotally connected to said seat (40);
- at least one slide sensor (2) having a first sensor portion (2') and a second sensor portion (2"), wherein said first sensor portion (2') is integral to said slide (10) and said second sensor portion (2") is integral to said rail (11), said at least one slide sensor (2) configured to measure the distance between said first (2') and said second (2") sensor portion in any of said plurality of positions of said slide (10) on said rail (11);
- a control unit (70) connected logically to at least one among said first and second sensor portion (2', 2") of said at least one slide sensor (2), said control unit (70) configured to receive from said at least one slide sensor (2) a distance signal proportional to one of said plurality of positions;
- a memory unit (80) configured to store a distance signal in at least one preferred position selected by a user among said plurality of positions;
- a signalling unit (90) configured to
- store (80) a preferred position of said slide (10) with respect to said chassis (9) selected by a user between said intermediate positions;
- measure a relative movement caused manually by said user between said slide (10) and said rail (11);
- compare the distance signal determined by said slide sensor (2) in an actual position of the slide (10) with a distance signal of at least one preferred position;
- emit (90) a notification signal (91,92,93,94) directly to the user when the actual position is coincident with the preferred position,
said signalling unit comprising a signalling element selected from the group consisting of: an acoustic emitter (91), a light emitter (92), a display (93) with a shield depicting at least one position indicator, a vibrotactile emitter (94), and configured to emit said notification signal and to send it directly to the user respectively in a acoustic, visible, vibrotactile way or a combination thereof,
**characterized in that**
said at least one slide sensor is an optical sensor (3) configured to emit an electromagnetic signal in the visible range, infrared or UV, in particular laser radiations, causing said radiations to cross a portion of air substantially without obstacles set between said first and said second portion, and for determining said distance according to radiations received after said crossing, wherein said optical sensor is configured to emit said radiations and to measure said distance with a principle selected from the group consisting of: time of flight, compensation photodetector circuit, triangulation;
or
**in that** said at least one slide sensor (2) comprises an emitter (91) which is ) configured to emit an acoustic or ultrasonic perturbation, for causing crossing to said perturbation a portion of air substantially without obstacles set between said first portion (2') and said second portion (2"), and for determining said distance according to a return perturbation received after said crossing.

2. A vehicle seat (1) according to claim 1, wherein said at least one slide sensor is said optical sensor, and said first sensor portion (2') comprises an emitter and a receiver, configured respectively for emitting and receiving a light beam, and said second sensor portion (2") is a reflective element arranged to reflect, towards said receiver, said light beam coming from said emitter.

3. A vehicle seat (1) according to claim 1, wherein said at least one slide sensor is said optical sensor, and said first sensor portion (2') comprises at least one optical fibre (5) configured to emit a light beam towards said second sensor portion (2").

4. A vehicle seat (1) according to claim 1, in which there are further provided height sensor portions with respect to the chassis (9) and on the seatback with respect to the seat, said signalling unit configured also to:
- store a preferred position in height of the seat with respect to said chassis (9) or of adjusting the reclination of the seatback with respect to the seat selected by a user between possible respective intermediate positions;
- measure a relative movement caused manually by said user between seat and chassis (9) or between seatback and seat;
- compare the distance signal determined by said slide sensor in an actual position of the seat with respect to the chassis (9) or the seatback with respect to the seat with a respective value of distance of at least one preferred position;
- emitting said notification signal directly to the user when the actual position is coincident with the preferred position with said signalling element.

5. Vehicle seat (1) comprising:
- a rail (11) integral to a chassis (9) of said vehicle;
- a slide (10) configured to move along said rail (11) between a first position and a second position of said rail (11) crossing a plurality of intermediate positions;
- a seat (40) configured to move relatively with respect to said slide (10) with at least one component of orthogonal movement to said chassis (9);
- a seatback (16) pivotally connected to said seat (40);
- at least one seat height sensor (110) having a first sensor portion (110') and a second sensor portion (110"), wherein said first sensor portion (110') is integral to said seat (40) and said second sensor portion (110") is integral to said slide (10), said at least one seat height sensor (110) configured to measure the distance between said first (110') and said second (110") sensor portion in any position of said seat (40) with respect to said slide (10);
- a control unit (70) connected logically to at least one among said first sensor portion (110') of said at least one seat height sensor (110) for receiving by the latter a distance signal proportional to any position of said seat (40) with respect to said slide (10);
- a memory unit (80) configured to store a distance signal in at least one preferred position selected by a user between said any position of said seat (40) with respect to said slide (10);
**characterized in that** it comprises:
- a signalling unit (90) configured to compare said distance signal determined by said at least one seat height sensor (110) in an actual position of said seat (40) with a distance signal of said at least one preferred position and for emitting a notification signal to said user when said actual position is coincident with said preferred position;
- said signalling unit comprising a signalling element selected from the group consisting of: an acoustic emitter (91), a light emitter (92), a display (93) with a shield depicting at least one position indicator, a vibrotactile emitter (94), and configured to emit said notification signal and to send it directly to the user respectively in a acoustic, visible, vibrotactile way or a combination thereof,
and wherein
said height sensor is -an optical sensor (3) configured to emit an electromagnetic signal in the visible range, infrared or UV, in particular laser radiations, causing said radiations to cross a portion of air substantially without obstacles set between said first and said second portion, and for determining said distance according to radiations received after said crossing, wherein said optical sensor is configured to emit said radiations and to measure said distance with a principle selected from the group consisting of: time of flight, compensation photodetector circuit, triangulation;
or wherein said height sensor comprises an emitter which is configured to emit an acoustic or ultrasonic perturbation, for causing crossing to said perturbation a portion of air substantially without obstacles set between said first portion (2') and said second portion (2"), and for determining said distance according to a return perturbation received after said crossing.

## Patentansprüche

1. Fahrzeugsitz (1), umfassend:
- eine mit einem Fahrgestell (9) des Fahrzeugs einstückige Schiene (11);
- ein Gleitstück (10), konfiguriert, um sich entlang der Schiene (11) zwischen einer ersten Position und einer zweiten Position der Schiene (11) zu bewegen, wobei eine Vielzahl von zwischenliegenden Positionen der Schiene (11) durchquert wird;
- einen Sitz (40), konfiguriert, um sich bezüglich des Gleitstücks (10) relativ, mit mindestens einer Komponente orthogonaler Bewegung gegenüber dem Fahrgestell (9), zu bewegen;
- eine schwenkbar mit dem Sitz (40) verbundene Rückenlehne (16);
- mindestens einen Gleitstücksensor (2) mit einem ersten Sensorabschnitt (2') und einem zweiten Sensorabschnitt (2"), wobei der erste Sensorabschnitt (2') mit dem Gleitstück (10) einstückig ist und der zweite Sensorabschnitt (2") mit der Schiene (11) einstückig ist, wobei der mindestens eine Gleitstücksensor (2) konfiguriert ist, um den Abstand zwischen dem ersten (2') und den zweiten (2") Sensorabschnitt in beliebiger der Vielzahl von Positionen des Gleitstücks (10) auf der Schiene (11) zu messen;
- eine mit mindestens einem unter dem ersten und zweiten Sensorabschnitt (2', 2") des mindestens einen Gleitstücksensors (2) logisch verbundene Steuerungseinheit (70), wobei die Steuerungseinheit (70) konfiguriert ist, um von dem mindestens einen Gleitstücksensor (2) ein Abstandssignal proportional zu einer der Vielzahl von Positionen zu empfangen;
- eine Speichereinheit (80), konfiguriert, um ein Abstandssignal in mindestens einer von einem Anwender unter der Vielzahl von Positionen ausgewählten bevorzugten Position zu speichern;
- eine Signalisierungseinheit (90), konfiguriert zum
- Speichern (80) einer durch einen Anwender zwischen den zwischenliegenden Positionen ausgewählten bevorzugten Position des Gleitstücks (10) bezüglich des Fahrgestells (9);
- Messen einer relativen Bewegung, die durch den Anwender zwischen dem Gleitstück (10) und der Schiene (11) verursacht wird;
- Vergleichen des durch den Gleitstücksensor (2) bestimmten Abstandssignals in einer tatsächlichen Position des Gleitstücks (10) mit einem Abstandssignal von mindestens einer bevorzugten Position;
- Emittieren (90) eines Benachrichtigungssignals (91,92,93,94) direkt an den Anwender, wenn die tatsächliche Position mit der bevorzugten Position zusammenfällt,
wobei die Signalisierungseinheit ein Signalisierungselement umfasst, ausgewählt aus der Gruppe, bestehend aus: einem akustischen Emitter (91), einem Lichtemitter (92), einer Anzeige (93) mit einer Abschirmung, die mindestens einen Positionsindikator abbildet, einem vibrotaktilen Emitter (94), und konfiguriert, um das Benachrichtigungssignal zu emittieren und es jeweils auf akustische, sichtbare, vibrotaktile Weise oder eine Kombination davon direkt an den Anwender zu senden, **dadurch gekennzeichnet, dass** der mindestens eine Gleitstücksensor
- ein optischer Sensor (3) konfiguriert, um ein elektromagnetisches Signal im sichtbaren Bereich, Infrarot oder UV, insbesondere Laserstrahlungen, zu emittieren, was verursacht, dass die Strahlungen einen Abschnitt von Luft im Wesentlichen ohne zwischen dem ersten und dem zweiten Abschnitt gestellten Hindernissen durchquert, und zum Bestimmen des Abstands gemäß nach Durchqueren empfangenen Strahlungen, wobei der optische Sensor konfiguriert ist, die Strahlungen zu emittieren und den Abstand mit einem Prinzip zu messen, ausgewählt aus der Gruppe, bestehend aus: Flugzeit, Kompensations-Photodetektorschaltung, Triangulation;
oder dadurch, dass der mindestens eine Gleitstücksensor (2) einen Emitter (91) umfasst, der konfiguriert ist, um eine akustische oder Ultraschallperturbation zu emittieren, zum Verursachen, dass die Perturbation einen Abschnitt von Luft im Wesentlichen ohne zwischen dem ersten Abschnitt (2') und dem zweiten Abschnitt (2") gestellten Hindernissen durchquert, und zum Bestimmen des Abstands gemäß einer nach dem Durchqueren empfangenen Rückkehr-Perturbation.

2. Fahrzeugsitz (1) nach Anspruch 1, wobei der mindestens eine Gleitstücksensor der optische Sensor ist und der erste Sensorabschnitt (2') einen Emitter und einen Empfänger umfasst, jeweils konfiguriert zum Emittieren und Empfangen eines Lichtstrahls, und der zweite Sensorabschnitt (2") ein reflektierendes Element ist, angeordnet, um den von dem Emitter kommenden Lichtstrahl in Richtung des Empfängers zu reflektieren.

3. Fahrzeugsitz (1) nach Anspruch 1, wobei der mindestens eine Gleitstücksensor der optische Sensor ist und der erste Sensorabschnitt (2') mindestens eine Glasfaser (5) umfasst, konfiguriert, um einen Lichtstrahl in Richtung des zweiten Sensorabschnitts (2") zu emittieren.

4. Fahrzeugsitz (1) nach Anspruch 1, in dem bezüglich des Fahrgestells (9) und an der Rückenlehne bezüglich des Sitzes weiter Höhensensorabschnitte bereitgestellt sind, wobei die Signalisierungseinheit auch konfiguriert ist zum:
- Speichern einer bevorzugten Position in der Höhe des Sitzes bezüglich des Fahrgestells (9) oder Anpassen der Reklination der Rückenlehne bezüglich des Sitzes, ausgewählt durch einen Anwender zwischen möglichen jeweiligen zwischenliegenden Positionen;
- Messen einer relativen Bewegung, die zwischen Sitz und Fahrgestell (9) oder zwischen Rückenlehne und Sitz manuell durch den Anwender verursacht wird;
- Vergleichen des von dem Gleitstücksensor in einer tatsächlichen Position des Sitzes bezüglich des Fahrgestells (9) oder der Rückenlehne bezüglich des Sitzes bestimmten Abstandssignals mit einem jeweiligen Abstandswert von mindestens einer bevorzugten Position;
- Emittieren des Benachrichtigungssignals mit dem Signalisierungselement direkt an den Anwender, wenn die tatsächliche Position mit der bevorzugten Position zusammenfällt.

5. Fahrzeugsitz (1), umfassend:
- eine mit einem Fahrgestell (9) des Fahrzeugs einstückige Schiene (11);
- ein Gleitstück (10), konfiguriert, um sich entlang der Schiene (11) zwischen einer ersten Position und einer zweiten Position der Schiene (11) zu bewegen, wobei eine Vielzahl von zwischenliegenden Positionen durchquert wird;
- einen Sitz (40), konfiguriert, um sich bezüglich des Gleitstücks (10) relativ, mit mindestens einer Komponente orthogonaler Bewegung gegenüber dem Fahrgestell (9), zu bewegen;
- eine schwenkbar mit dem Sitz (40) verbundene Rückenlehne (16);
- mindestens einen Sitzhöhensensor (110) mit einem ersten Sensorabschnitt (110') und einem zweiten Sensorabschnitt (110"), wobei der erste Sensorabschnitt (110') mit dem Sitz (40) einstückig ist und der zweite Sensorabschnitt (110") mit dem Gleitstück (10) einstückig ist, wobei der mindestens eine Sitzhöhensensor (110) konfiguriert ist, um den Abstand zwischen dem ersten (110') und dem zweiten (110") Sensorabschnitt in beliebiger Position des Sitzes (40) bezüglich des Gleitstücks (10) zu messen;
- eine mit mindestens einem unter dem ersten Sensorabschnitt (110') des mindestens einen Sitzhöhensensors (110) logisch verbundene Steuerungseinheit (70) zum Empfangen, durch Letzteren, eines Abstandssignals proportional zu beliebiger Position des Sitzes (40) bezüglich des Gleitstücks (10);
- eine Speichereinheit (80), konfiguriert, um ein Abstandssignal in mindestens einer durch einen Anwender zwischen der beliebigen Position des Sitzes (40) bezüglich des Gleitstücks (10) ausgewählten bevorzugten Position zu speichern;
**dadurch gekennzeichnet, dass** sie umfasst:
- eine Signalisierungseinheit (90), konfiguriert, um das durch den mindestens einen Sitzhöhensensor (110) in einer tatsächlichen Position des Sitzes (40) bestimmte Abstandssignal mit einem Abstandssignal der mindestens einen bevorzugten Position zu vergleichen, und zum Emittieren eines Benachrichtigungssignals an den Anwender, wenn die tatsächliche Position mit der bevorzugten Position zusammenfällt;
- wobei die Signalisierungseinheit ein Signalisierungselement umfasst, ausgewählt aus der Gruppe, bestehend aus: einem akustischen Emitter (91), einem Lichtemitter (92), einer Anzeige (93) mit einer Abschirmung, die mindestens einen Positionsindikator abbildet, einem vibrotaktilen Emitter (94), und konfiguriert, um das Benachrichtigungssignal zu emittieren und es jeweils auf akustische, sichtbare, vibrotaktile Weise oder eine Kombination davon direkt an den Anwender zu senden, und wobei der Höhensensor
- ein optischer Sensor (3) konfiguriert, um ein elektromagnetisches Signal im sichtbaren Bereich, Infrarot oder UV, insbesondere Laserstrahlungen, zu emittieren, was verursacht, dass die Strahlungen einen Abschnitt von Luft im Wesentlichen ohne zwischen dem ersten und dem zweiten Abschnitt gestellten Hindernissen durchquert, und zum Bestimmen des Abstands gemäß nach Durchqueren empfangenen Strahlungen, wobei der optische Sensor konfiguriert ist, die Strahlungen zu emittieren und den Abstand mit einem Prinzip zu messen, ausgewählt aus der Gruppe, bestehend aus: Flugzeit, Kompensations-Photodetektorschaltung, Triangulation;
oder wobei der Höhensensor einen Emitter umfasst, der konfiguriert ist, um eine akustische oder Ultraschallperturbation zu emittieren, zum Verursachen, dass die Perturbation einen Abschnitt von Luft im Wesentlichen ohne zwischen dem ersten Abschnitt (2') und dem zweiten Abschnitt (2") gestellten Hindernissen durchquert, und zum Bestimmen des Abstands gemäß einer nach dem Durchqueren empfangenen Rückkehr-Perturbation.

## Revendications

1. Siège de véhicule (1) comprenant :
- un rail (11) intégré à un châssis (9) dudit véhicule ;
- une glissière (10) configurée pour se déplacer le long dudit rail (11) entre une première position et une seconde position dudit rail (11) en traversant une pluralité de positions intermédiaires dudit rail (11) ;
- un siège (40) configuré pour se déplacer de manière relative par rapport à ladite glissière (10) avec au moins une composante de mouvement orthogonal par rapport audit châssis (9) ;
- un dossier de siège (16) relié de manière pivotante audit siège (40) ;
- au moins un capteur de glissière (2) présentant une première partie de capteur (2') et une seconde partie de capteur (2"), dans lequel ladite première partie de capteur (2') est intégrée à ladite glissière (10) et ladite seconde partie de capteur (2") est intégrée audit rail (11), ledit au moins un capteur de glissière (2) étant configuré pour mesurer la distance entre ladite première partie de capteur (2') et ladite seconde partie de capteur (2") à l'une quelconque de ladite pluralité de positions de ladite glissière (10) sur ledit rail (11) ;
- une unité de commande (70) connectée de manière logique à au moins une parmi lesdites première et seconde parties de capteur (2', 2") dudit au moins un capteur de glissière (2), ladite unité de commande (70) étant configurée pour recevoir depuis ledit au moins un capteur de glissière (2) un signal de distance proportionnel à l'une de ladite pluralité de positions ;
- une unité de mémoire (80) configurée pour stocker un signal de distance dans au moins une position préférée sélectionnée par un utilisateur parmi ladite pluralité de positions ;
- une unité de signalisation (90) configurée pour
- mémoriser (80) une position préférée de ladite glissière (10) par rapport audit châssis (9) sélectionnée par un utilisateur entre lesdites positions intermédiaires ;
- mesurer un mouvement relatif provoqué manuellement par ledit utilisateur entre ladite glissière (10) et ledit rail (11) ;
- comparer le signal de distance déterminé par ledit capteur de glissière (2) dans une position réelle de la glissière (10) à un signal de distance d'au moins une position préférée ;
- émettre (90) un signal de notification (91, 92, 93, 94) directement pour l'utilisateur quand la position réelle coïncide avec la position préférée,
ladite unité de signalisation comprenant un élément de signalisation sélectionné dans le groupe consistant en : un émetteur acoustique (91), un émetteur de lumière (92), un affichage (93) avec un écran représentant au moins un indicateur de position, un émetteur vibrotactile (94), et étant configuré pour émettre ledit signal de notification et pour l'envoyer directement à l'utilisateur respectivement de manière acoustique, visible, vibrotactile ou une combinaison de ceux-ci,
**caractérisé en ce que** ledit au moins un capteur de glissière est
- un capteur optique (3) configuré pour émettre un signal électromagnétique dans la plage visible, infrarouge ou UV, en particulier des rayonnements laser, amenant lesdits rayonnements à traverser une partie d'air sensiblement sans obstacles disposés entre lesdites première et seconde parties, et pour déterminer ladite distance en fonction des rayonnements reçus après ladite traversée, dans lequel ledit capteur optique est configuré pour émettre lesdits rayonnements et pour mesurer ladite distance selon un principe sélectionné dans le groupe consistant en : temps de vol, circuit photodétecteur de compensation, triangulation ;
ou **en ce que** ledit au moins un capteur de glissière (2) comprend un émetteur (91) qui est configuré pour émettre une perturbation acoustique ou ultrasonore, pour amener ladite perturbation à traverser une partie d'air sensiblement sans obstacles disposés entre ladite première partie (2') et ladite seconde partie (2"), et pour déterminer ladite distance en fonction d'une perturbation de retour reçue après ladite traversée.

2. Siège de véhicule (1) selon la revendication 1, dans lequel ledit au moins un capteur de glissière est ledit capteur optique, et ladite première partie de capteur (2') comprend un émetteur et un récepteur, configurés respectivement pour émettre et recevoir un faisceau lumineux, et ladite seconde partie de capteur (2") est un élément réfléchissant agencé pour réfléchir, vers ledit récepteur, ledit faisceau lumineux provenant dudit émetteur.

3. Siège de véhicule (1) selon la revendication 1, dans lequel ledit au moins un capteur de glissière est ledit capteur optique, et ladite première partie de capteur (2') comprend au moins une fibre optique (5) configurée pour émettre un faisceau lumineux vers ladite seconde partie de capteur (2").

4. Siège de véhicule (1) selon la revendication 1, dans lequel sont en outre fournies des parties de capteur de hauteur par rapport au châssis (9) et sur le dossier de siège par rapport au siège, ladite unité de signalisation étant également configurée pour :
- stocker une position préférée de hauteur du siège par rapport audit châssis (9) ou de réglage d'inclinaison du dossier de siège par rapport au siège sélectionné par un utilisateur entre de possibles positions intermédiaires respectives ;
- mesurer un mouvement relatif provoqué manuellement par ledit utilisateur entre le siège et le châssis (9) ou entre le dossier de siège et le siège ;
- comparer le signal de distance déterminé par ledit capteur de glissière dans une position réelle du siège par rapport au châssis (9) ou du dossier de siège par rapport au siège à une valeur respective de distance d'au moins une position préférée ;
- émettre ledit signal de notification directement pour l'utilisateur quand la position réelle coïncide avec la position préférée avec ledit élément de signalisation.

5. Siège de véhicule (1) comprenant :
- un rail (11) intégré à un châssis (9) dudit véhicule ;
- une glissière (10) configurée pour se déplacer le long dudit rail (11) entre une première position et une seconde position dudit rail (11) en traversant une pluralité de positions intermédiaires ;
- un siège (40) configuré pour se déplacer de manière relative par rapport à ladite glissière (10) avec au moins une composante de mouvement orthogonal par rapport audit châssis (9) ;
- un dossier de siège (16) relié de manière pivotante audit siège (40) ;
- au moins un capteur de hauteur de siège (110) présentant une première partie de capteur (110') et une seconde partie de capteur (110"), dans lequel ladite première partie de capteur (110') est intégrée audit siège (40) et ladite seconde partie de capteur (110") est intégrée à ladite glissière (10), ledit au moins un capteur de hauteur de siège (110) étant configuré pour mesurer la distance entre ladite première partie de capteur (110') et ladite seconde partie de capteur (110") à n'importe quelle position dudit siège (40) par rapport à ladite glissière (10) ;
- une unité de commande (70) connectée de manière logique à au moins une parmi ladite première partie de capteur (110') dudit au moins un capteur de hauteur de siège (110) pour recevoir par ce dernier un signal de distance proportionnel à n'importe quelle position dudit siège (40) par rapport à ladite glissière (10) ;
- une unité de mémoire (80) configurée pour stocker un signal de distance dans au moins une position préférée sélectionnée par un utilisateur entre ladite position quelconque dudit siège (40) par rapport à ladite glissière (10) ;
**caractérisé en ce qu'**il comprend :
- une unité de signalisation (90) configurée pour comparer ledit signal de distance déterminé par ledit au moins un capteur de hauteur de siège (110) dans une position réelle dudit siège (40) à un signal de distance de ladite au moins une position préférée et pour émettre un signal de notification pour ledit utilisateur quand ladite position réelle coïncide avec ladite position préférée ;
- ladite unité de signalisation comprenant un élément de signalisation sélectionné dans le groupe consistant en : un émetteur acoustique (91), un émetteur de lumière (92), un affichage (93) avec un écran représentant au moins un indicateur de position, un émetteur vibrotactile (94), et étant configuré pour émettre ledit signal de notification et pour l'envoyer directement à l'utilisateur respectivement de manière acoustique, visible, vibrotactile ou une combinaison de ceux-ci,
et dans lequel ledit capteur de hauteur est
- un capteur optique (3) configuré pour émettre un signal électromagnétique dans la plage visible, infrarouge ou UV, en particulier des rayonnements laser, amenant lesdits rayonnements à traverser une partie d'air sensiblement sans obstacles disposés entre lesdites première et seconde parties, et pour déterminer ladite distance en fonction des rayonnements reçus après ladite traversée, dans lequel ledit capteur optique est configuré pour émettre lesdits rayonnements et pour mesurer ladite distance selon un principe sélectionné dans le groupe consistant en : temps de vol, circuit photodétecteur de compensation, triangulation ;
ou dans lequel ledit capteur de hauteur comprend un émetteur qui est configuré pour émettre une perturbation acoustique ou ultrasonore, pour amener ladite perturbation à traverser une partie d'air sensiblement sans obstacles disposés entre ladite première partie (2') et ladite seconde partie (2"), et pour déterminer ladite distance en fonction d'une perturbation de retour reçue après ladite traversée.
